# DEMANDE DE BREVET EUROPEEN

(11) **EP 1 679 608 A2**
(43) Date de publication de la demande: **12.07.2006**
(21) Numéro de dépôt: 06290032.9
(22) Date de dépôt: 06.01.2006
(51) Int. Cl.: G06F 13/28

(54) **Procédé de conception d'un périphérique compatible DMA**

(30) Priorité: 10.01.2005 FR 0500228
(71) Demandeur: STMicroelectronics SA, 92120 Montrouge (FR)
(72) Inventeur: Roger, André, 38340 Voreppe (FR)
(74) Mandataire: Bentz, Jean-Paul

(57) **Abrégé**

L'invention concerne un procédé d'organisation en mémoire des registres d'un périphérique, ledit périphérique comprenant au moins un registre de contrôle (R0, R1) devant être adressé en mémoire pour mémoriser des données de configuration dudit périphérique, un registre de transmission (R2) devant être adressé en mémoire pour mémoriser des données à transmettre de la mémoire vers ledit périphérique et un registre de réception (R4) devant être adressé en mémoire pour mémoriser des données à transmettre du périphérique vers la mémoire, ledit procédé étant caractérisé en ce qu'il comprend les étapes suivantes consistant à :
dupliquer, à l'intérieur d'une plage de mémoire donnée (P1), ledit registre de transmission/réception à des adresses différentes et contiguës et
implémenter en mémoire lesdits registres de contrôle à des adresses contiguës au niveau d'une plage mémoire (P0) adjacente à la plage mémoire où a été dupliqué le registre de transmission/réception.

## Description

La présente invention concerne de manière générale le domaine des communications avec différents périphériques dans un système informatique.

Plus particulièrement, la présente invention s'applique au domaine des circuits intégrés programmables du type comportant un microprocesseur, des périphériques du microprocesseur et un bus d'interconnexion pour relier les périphériques au microprocesseur. Dans le cadre de la présente invention, on entend par périphérique du microprocesseur tout dispositif du circuit intégré programmable distinct de l'unité centrale de traitement (microprocesseur) à laquelle il est relié et qui est susceptible d'assurer l'entrée et la sortie de données. Il s'agit notamment de périphériques de communication avec l'extérieur du système.

Dans le domaine industriel, certains périphériques de communication requièrent de configurer préalablement le type de communication devant être mise en oeuvre avant de pouvoir la démarrer. Typiquement, cette étape implique d'initialiser des registres de contrôle du périphérique avec des informations de vitesse, de nombre de bits par caractère transmis, ou encore d'autres types d'information selon le type de protocole utilisé pour accéder au périphérique.

Par exemple, dans le cadre du protocole SPI (« Serial Peripheral Interface » dans le langage anglo-saxon), un microcontrôleur est prévu pour communiquer avec plusieurs périphériques par l'intermédiaire d'une liaison série unique, chaque périphérique étant alors connecté au bus SPI par une ligne de sélection de périphérique, dite ligne de « chip select » selon la terminologie anglo-saxonne, servant à sélectionner un périphérique parmi plusieurs périphériques. Ainsi, avant d'initier un échange des données sur le bus SPI avec un périphérique, le microcontrôleur doit au préalable configurer le registre « chip select » du périphérique avec lequel il veut dialoguer. D'autres registres de contrôle peuvent également être initialisés se rapportant par exemple à des informations de configuration de l'horloge lors de l'échange de données.

Egalement, dans le cadre du protocole LIN (pour « Local Interconnect Network » dans le langage anglo-saxon), le bus LIN doit également être configuré avant de pouvoir démarrer une communication avec un périphérique LIN. Notamment, il est nécessaire d'envoyer tout d'abord un en-tête sur le bus contenant les caractéristiques du message, par exemple le nombre d'octets à transmettre, la direction du transfert, etc.

Ainsi, avant d'initier un échange de données avec ce type de périphérique compatible SPI ou LIN, un certain nombre d'opérations de configuration doivent être mises en oeuvre. Ce mode de fonctionnement rend donc ce type de périphérique mal adapté aux architectures de systèmes prévues pour envoyer directement les données d'un périphérique à la mémoire, ou de la mémoire au périphérique, en utilisant un contrôleur de type DMA (pour « Direct Memory Access » dans le langage anglo-saxon), permettant d'accéder directement à la mémoire sans passer par le processeur.

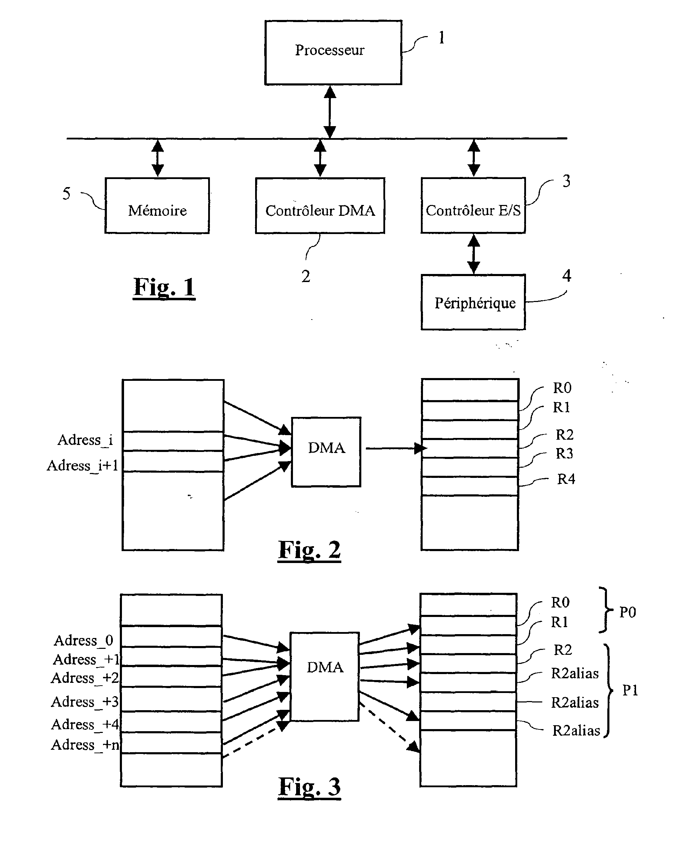

En effet, dans ce contexte de transfert direct, comme illustré à la figure 1, le microprocesseur 1 initialise tout d'abord la communication DMA en envoyant au contrôleur DMA 2 l'adresse de début de transfert, la longueur des données et le sens du transfert, puis il déclenche le transfert. Le contrôleur DMA 2 prend alors en charge le contrôle de la mémoire 5 et du contrôleur d'entrée/sortie 3 du périphérique 4. Le transfert de données peut alors s'effectuer sans passer par le processeur.

Cependant, le contrôleur DMA n'est pas prévu pour assurer les opérations d'initialisation des registres de contrôle des périphériques devant être configurés avant de démarrer tout échange de données.

Le transfert d'accès direct à la mémoire permet en effet à un périphérique d'« emprunter de la mémoire » au système afin de s'en servir comme zone de tampon (en anglais buffer), c'est-à-dire comme zone de stockage temporaire, permettant d'enregistrer rapidement des données en entrée ou en sortie. Pour ce faire, un emplacement de la mémoire, repéré par une adresse de début et une adresse de fin, est assigné au périphérique lui permettant d'échanger des données avec le système selon la méthode d'accès direct à la mémoire, sans faire intervenir le microprocesseur.

Selon l'exemple de la figure 2, un périphérique de communication dispose ainsi des registres R0 à R4, implémentés à des adresses fixes en mémoire. Les registres R0, R1 et R3 sont prévus pour être des registres de contrôle nécessitant d'être configurés avant de démarrer un échange de données. Par exemple, le registre R0 est un registre contenant l'information de débit binaire, le registre R1 est un registre contenant l'information de « chip select », et le registre R3 est un registre contenant l'information de configuration d'horloge. Quant au registre R2, il s'agit du registre de transmission de données et le registre R4 est le registre de réception de données. Ces registres sont implémentés à des adresses fixes en mémoire.

Par ailleurs, comme illustré également en figure 2, lorsque le contrôleur DMA implémente un transfert DMA de données de la mémoire vers un périphérique, le transfert est typiquement toujours réalisé à partir d'adresses variables en mémoire : adress_i, adress_i+1, ..., qui s'auto-incrémentent (ou s'auto-décrémentent), vers une adresse fixe en mémoire correspondant à l'adresse du registre de transmission R2 du périphérique.

De ce fait, on peut se rendre compte qu'il est impossible pour le contrôleur DMA de rassembler en une seule opération la phase d'initialisation des registres de contrôle du périphérique et la phase de transfert proprement dite des données vers le registre de transmission. En effet, la phase d'initialisation des registres de contrôle R0, R1 et R3 du périphérique 4 impose de pointer à des adresses mémoires qui ne sont pas contiguës. Or, le contrôleur DMA n'est pas capable de réaliser une telle opération. Le contrôleur DMA classique n'est prévu que pour réaliser un transfert d'adresses variables vers une adresse fixe dans le sens mémoire vers périphérique ou bien d'une adresse fixe (correspondant à celle du registre de réception R4) vers des adresses variables en mémoire qu'on va incrémenter, dans le sens périphérique vers mémoire.

Du fait que les registres de contrôle du périphérique sont rangés en mémoire à des adresses non séquentielles, l'établissement d'un échange de données avec ce type de périphérique nécessitant préalablement une initialisation de ses registres de contrôle, implique alors un travail préliminaire supplémentaire du processeur principal pour initialiser ces registres avant de pouvoir passer le relais au contrôleur DMA pour le transfert de données proprement dit. Les performances en termes de temps d'utilisation du processeur se trouvent donc dégradées par cette étape d'initialisation préalable des registres de contrôle par le processeur.

Un objet de l'invention est donc de prévoir un procédé pour rendre compatibles avec l'architecture de transfert de données DMA, en remédiant aux inconvénients précités, les périphériques de communication du type de ceux nécessitant une étape préalable de configuration de leurs registres avant d'initier un échange de données.

Pour atteindre cet objet, l'invention prévoit un procédé d'organisation en mémoire des registres d'un périphérique, ledit périphérique comprenant au moins un registre de contrôle devant être adressé en mémoire pour mémoriser des données de configuration dudit périphérique, un registre de transmission devant être adressé en mémoire pour mémoriser des données à transmettre de la mémoire vers ledit périphérique et un registre de réception devant être adressé en mémoire pour mémoriser des données à transmettre du périphérique vers la mémoire, ledit procédé étant caractérisé en ce qu'il comprend les étapes suivantes consistant à :
dupliquer, à l'intérieur d'une plage de mémoire donnée, ledit registre de transmission/réception à des adresses différentes et contiguës et
implémenter en mémoire lesdits registres de contrôle à des adresses contiguës au niveau d'une plage mémoire adjacente à la plage mémoire où a été dupliqué le registre de transmission/réception.

Selon un mode de réalisation, les registre de contrôle sont implémentés en mémoire avant la plage mémoire où a été dupliqué le registre de transmission/réception.

Selon une variante, les registre de contrôle sont implémentés en mémoire après la plage mémoire où a été dupliqué le registre de transmission/réception.

De préférence, les registres de contrôle sont implémentés en mémoire selon un ordre décroissant d'usage par rapport à la plage mémoire où sont dupliquées les adresses du registre de transmission/réception, l'usage d'un registre de contrôle étant défini par la fréquence de son adressage.

De préférence, le nombre de duplications en mémoire du registre de transmission/réception dépend du type de protocole de communication associé au périphérique.

Avantageusement, la duplication en mémoire du registre de transmission/réception résulte d'un décodage partiel des adresses des données devant être mémorisées, le décodage partiel consistant de préférence à ignorer les adresses de poids faible.

Selon un mode de réalisation, le procédé comprend la préparation d'une structure de données en mémoire comprenant les données de configuration du périphérique et les données à transmettre de la mémoire vers ledit périphérique, et la mise en oeuvre d'une opération de transfert desdites données vers les registres du périphérique implémentés en mémoire selon un mode DMA incrémental à partir des adresses variables des données de ladite structure vers les adresses variables des différents registres du périphérique, la phase d'initialisation des registres de contrôle du périphérique étant effectuée pendant ladite opération de transfert DMA.

L'invention concerne également un circuit électronique comprenant un microprocesseur relié à au moins un périphérique par l'intermédiaire d'un bus d'interconnexion, caractérisé en ce que ledit microprocesseur comprend des moyens pour la mise en oeuvre du procédé selon l'invention.

Par exemple, le périphérique est un périphérique de type SPI ou LIN.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre schématiquement une architecture de transfert de données par transfert direct type DMA et a déjà été décrite ;
- la figure 2 illustre schématiquement le concept actuel d'un transfert de données de type DMA vers les registres d'un périphérique et a déjà été décrite ;
- la figure 3 illustre schématiquement un transfert de données compatible DMA, de la mémoire de travail du système vers les registres d'un périphérique implémentés en mémoire selon la présente invention, et
- la figure 4 décrit un exemple de réalisation de décodage d'adresses susceptible d'être mis en oeuvre dans le cadre du transfert DMA de la figure 3.

Le principe sur lequel repose la présente invention consiste tout d'abord, lors de la phase de conception du périphérique, à implémenter plusieurs fois en mémoire, à partir d'une adresse de départ donnée, le registre de transmission/réception du périphérique de communication. Autrement dit, le registre de transmission/réception du périphérique est dupliqué n fois à l'intérieur d'une plage de mémoire donnée à des adresses mémoires physiques différentes, multiples et contiguës. Il n'est donc plus implémenté à une adresse fixe en mémoire. Le nombre de duplications des adresses physiques du registre de transmission/réception va dépendre du type de périphérique implémenté. Par exemple, dans le cadre du protocole LIN, où les message transmis entre le périphérique et la mémoire comprennent actuellement 8 octets, le registre de transmission/réception du périphérique sera dupliqué 8 fois en mémoires à des adresses physiques différentes et contiguës.

L'autre principe sur lequel repose l'invention consiste alors à organiser les registres de contrôle du périphérique d'une manière adéquate en modifiant la mise en correspondance de ces registres de contrôle du périphérique de communication avec les adresses physiques en mémoire. On prévoit ainsi d'implémenter en mémoire ces registres de contrôle à des adresses contiguës au niveau d'une plage mémoire adjacente à la plage mémoire où a été dupliqué le registre de transmission/réception. Les registres de contrôle sont de préférence implémentés avant les registres de transmission. Dans une variante de réalisation, ils peuvent également être implémentés après les registres de transmission.

De cette façon, avec une telle implémentation en mémoire des registres du périphérique, un contrôleur DMA standard va pouvoir réaliser le transfert d'un ensemble de données de la mémoire vers le périphérique de communication, tout en passant également les informations de configuration des registres de contrôle du périphérique au cours de la même opération de transfert.

Pour initialiser la communication, le microprocesseur a simplement à préparer une structure de données en mémoire, comprenant les données de configuration des registres de contrôle et les données du message à transmettre vers les registres de transmission du périphérique, et ensuite à donner l'ordre au contrôleur DMA d'exécuter le transfert de cette structure de données vers les registres du périphérique implémentés en mémoire selon les principes de l'invention.

Le contrôleur DMA a alors pour rôle d'écrire la structure de données pré-établie dans les registres du périphérique implémentés en mémoire, selon un mode de transfert incrémental, à partir des adresses mémoires variables incrémentales de la structure de données vers les adresses mémoires variables incrémentales correspondant aux différents registres du périphérique.

Ce processus est plus précisément décrit à la figure 3, illustrant un tel transfert de données compatible DMA, de la mémoire de travail du système vers les registres d'un périphérique de type SPI implémentés en mémoire selon la présente invention. La figure 3 illustre ainsi l'image mémoire de la structure de données préparée par le processeur. Cette structure de données commence à l'adresse mémoire adress_0 et se termine à l'adresse mémoire adress_+n. Chaque donnée est par exemple codée sur huit bits.

La figure 3 illustre également l'image mémoire du périphérique avec l'implémentation en mémoire, telle qu'elle a été expliquée plus haut, de ses registres de contrôle, par exemple R0 et R1, au niveau d'une première plage mémoire P0 et de son registre de transmission R2, lequel est dupliqué à plusieurs adresses physiques différentes et contiguës au niveau d'une seconde plage mémoire P1. Chacune de ces adresses différentes correspond donc au registre de transmission dupliqué R2alias du périphérique. Par ailleurs, les registres de contrôle sont implémentés à des adresses séquentielles par rapport aux registres de transmission et la plage mémoire P0 est adjacente à la plage mémoire P1 où sont implémentés les registres de transmission. Les registres du périphérique sont par exemple codés sur huit bits.

Selon l'exemple de la figure 3, on a d'abord un premier registre de contrôle R0, implémenté à une adresse mémoire donnée, pour l'information sur le débit binaire et la configuration d'horloge et un second registre de contrôle R1, implémenté à une adresse mémoire incrémentée d'un par exemple par rapport à l'adresse mémoire du premier registre de contrôle, pour l'information de « chip select », permettant de définir quel périphérique SPI est adressé sur le bus.

Selon un mode de réalisation, on peut définir différents niveaux de registre de contrôle. Ainsi, les registres de contrôle sont préférentiellement implémentés en mémoire selon un ordre décroissant d'importance ou d'usage, compte-tenu de la fréquence de leur adressage, par rapport à la plage mémoire où sont dupliquées les adresses du registre de transmission, comme illustré dans l'exemple de la figure 3 où on trouve d'abord le registre R1 implémenté à une adresse adjacente des adresses dupliquées du registre de transmission, puis le registre R0. En effet, certains registres de contrôle auront besoin d'être initialisés à chaque transfert de message. C'est le cas notamment dans le cadre de l'exemple du SPI, pour le registre R1 « chip select », qui devra toujours être configuré entre deux transferts pour sélectionner un autre périphérique ou confirmer que le même périphérique est sélectionné. Par contre, la vitesse de transfert n'a pas toujours besoin d'être reconfigurée à chaque transfert si elle est identique pour tous les périphériques et donc le registre R0 n'est pas nécessairement réinitialisé et sa valeur peut être réutilisée.

A partir de la structure de données préalablement préparée par le processeur, le contrôleur DMA va donc exécuter, pour chaque donnée codée respectivement à l'adresse mémoire de départ adress_0 jusqu'à l'adresse incrémentale adress_+n, une opération de transfert de donnée vers les registres du périphérique implémentés en mémoire. La mise en oeuvre de cette étape de transfert de donnée consiste plus précisément en un décodage d'adresse dont un exemple sera donné plus loin.

Ainsi, la donnée codée à l'adresse mémoire adress_0, qui comprend un mot de configuration d'horloge et de débit binaire, est transférée à l'adresse mémoire correspondant au premier registre de contrôle R0. Puis, la donnée codée à l'adresse mémoire suivante incrémentée adress_+1, qui comprend un mot de configuration du « chip select », est transférée à l'adresse mémoire correspondant au second registre de contrôle R1. La phase d'initialisation des registres de contrôle est donc réalisée par le contrôleur DMA.

Ensuite, le transfert DMA se poursuit et le transfert des données du message à transmettre vers le périphérique démarre. Ainsi, la première donnée du message à transmettre, codée à l'adresse suivante incrémentée adress_+2, est transférée vers l'adresse correspondante du registre de transmission R2, la deuxième donnée du message à transmettre, codée à l'adresse suivante incrémentée adress_+3, est transférée vers l'adresse correspondante du premier registre de transmission dupliqué R2alias et ainsi de suite jusqu'à la dernière donnée du message à transmettre, codée à l'adresse adress_+n, qui est transférée vers l'adresse correspondante du dernier registre de transmission dupliqué R2alias.

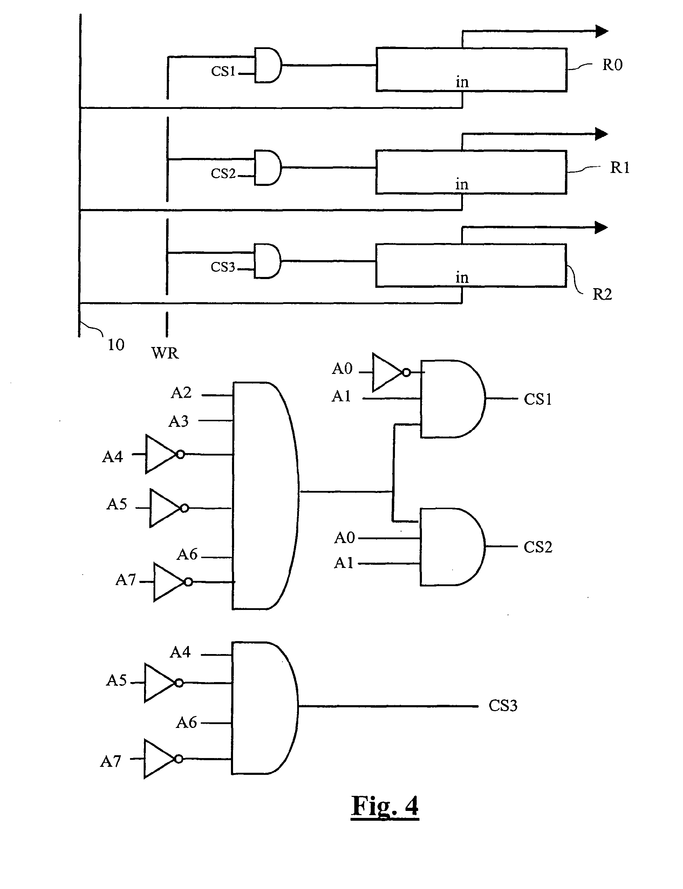

Le transfert tel qu'il vient d'être décrit en référence à la figure 3 conduit à avoir deux types de décodage d'adresses. On a ainsi un premier type de décodage d'adresse pour le décodage multiple du registre de transmission qui est dupliqué à plusieurs adresses physiques différentes et un second type de décodage d'adresse pour le décodage des registres de contrôle implémentés en mémoire avant (ou après selon une variante) les registres de transmission. Ces décodages sont réalisés par des portes logiques comme illustré à la figure 4.

La figure 4 décrit donc un exemple de réalisation de décodage d'adresses susceptible d'être mis en oeuvre dans le cadre du transfert DMA de la figure 3. Chaque registre R0, R1 et R2 est représenté respectivement par une bascule D, reliée sur son entrée in à un bus de données 10. Le registre R0 est commandé par une porte ET recevant sur ses entrées respectives le signal de commande d'écriture WR et le signal d'adresse CS1 correspondant à l'adresse décodée du registre de contrôle R0. Le registre R1 est quant à lui commandé par une porte ET recevant sur ses entrées respectives le signal de commande d'écriture WR et le signal d'adresse CS2 correspondant à l'adresse décodée du registre de contrôle R1. Enfin, le registre de transmission R2 est commandé par une porte ET recevant sur ses entrées respectives le signal de commande d'écriture WR et le signal d'adresse CS3 correspondant aux adresses multiples décodées du registre de transmission R2.

Un réseau de portes ET recevant sur leurs entrées respectives les signaux d'adresse A0, A1, A2, A3, A4, A5, A6, A7 des données à transmettre via le bus de données 10 vers les différents registres du périphérique est mis en oeuvre, permettant d'assurer le décodage des adresses CS1, CS2 et CS3 des différents registres. Selon l'exemple de la figure 4, l'adresse décodée CS1 correspondant au registre de contrôle R0 vaut 01001110 et l'adresse CS2 correspondant au registre de contrôle R1 est incrémenté de 1 et vaut 01001111. Les adresses CS3, correspondant aux différentes adresses du registre de transmission dupliqué, résultent d'un décodage partiel des adresses A4 à A7, en ignorant les adresses de poids faible, de A0 jusqu'à A3. Les adresses CS3 sont donc de la forme 0101xxxx. Le registre de transmission R2 est donc dupliqué en mémoire aux adresses respectives suivantes 01010000, 01010001,..., 0101111. De cette manière, le registre de transmission R2 est dupliqué plusieurs fois en mémoire à partir de l'adresse 01010000 et les registres de contrôle R0 et R1 sont implémentés en mémoire à des adresses séquentielles, respectivement 01001110 et 01001111 par rapport aux adresses du registre R2

Ainsi, la duplication en mémoire du registre de transmission à des adresses physiques différentes et contiguës et l'organisation particulière des registres de contrôle, qui sont implémentés à des adresses séquentielles par rapport aux registres de transmission dupliqués, permettent d'effectuer le transfert des données à transmettre vers le périphérique selon un mode DMA incrémental, à partir d'adresses mémoires variables vers des adresses mémoires variables qui s'incrémentent, la phase d'initialisation des registres de contrôle pouvant en outre être mise en oeuvre pendant la même opération de transfert par le contrôleur DMA. Cela libère avantageusement du temps d'utilisation du processeur tout en continuant d'utiliser un contrôleur DMA de base.

De plus, un tel mode de fonctionnement du contrôleur DMA de base dans le contexte de la présente invention va normalement à l'encontre des principes de transferts mémoire/périphérique selon lesquels les transferts sont typiquement réalisés d'adresses variables vers adresse fixe (correspondant à l'adresse du registre de transmission). Un transfert d'adresses variables vers adresses variables, rendu possible grâce à la duplication en mémoire du registre de transmission, est habituellement utilisé dans le cadre de transferts mémoire/mémoire, et non dans le cadre de transferts mémoire/périphérique.

Avantageusement, du fait que la phase d'initialisation des registres de contrôle peut être réalisée en même temps que le transfert DMA, on peut envisager d'ajouter plus d'intelligence au sein du périphérique en vue de garantir par exemple la sécurité du transfert DMA. Par exemple, un registre de contrôle pourrait être ajouté pour définir le nombre de caractères à transmettre dans le message. Puis, le contrôleur pourrait alors initialiser ce registre avant de démarrer l'écriture des registres de transmission.

Par ailleurs, si la description a essentiellement été faite en référence au registre de transmission du périphérique dans le cadre de transfert de la mémoire vers le périphérique, le principe de conception d'un périphérique selon l'invention peut être repris dans le cadre de transfert du périphérique vers la mémoire. Dans ce cas, c'est le registre de réception qui est dupliqué pour mémoriser les données devant être lues du périphérique vers la mémoire. Il faudra alors utiliser deux canaux DMA. Un premier canal DMA va servir pour la phase d'initialisation où on va écrire des données de configuration dans les registres de contrôle et un second canal sera utilisé pour la phase de réception, servant à lire le contenu du registre de réception du périphérique dupliqué en mémoire selon le principe de l'invention. Les deux canaux pourront alors être chaînés.

## Revendications

1. Procédé d'organisation en mémoire des registres d'un périphérique, ledit périphérique comprenant au moins un registre de contrôle (R0, R1) devant être adressé en mémoire pour mémoriser des données de configuration dudit périphérique, un registre de transmission (R2) devant être adressé en mémoire pour mémoriser des données à transmettre de la mémoire vers ledit périphérique et un registre de réception (R4) devant être adressé en mémoire pour mémoriser des données à transmettre du périphérique vers la mémoire, ledit procédé étant **caractérisé en ce qu'**il comprend les étapes suivantes consistant à :
dupliquer, à l'intérieur d'une plage de mémoire donnée (P1), ledit registre de transmission/réception à des adresses différentes et contiguës et
implémenter en mémoire lesdits registres de contrôle à des adresses contiguës au niveau d'une plage mémoire (P0) adjacente à la plage mémoire où a été dupliqué le registre de transmission/réception.

2. Procédé selon la revendication 1, **caractérisé en ce que** les registre de contrôle (R0, R1) sont implémentés en mémoire avant la plage mémoire (P1) où a été dupliqué le registre de transmission/réception.

3. Procédé selon la revendication 1, **caractérisé en ce que** les registre de contrôle (R0, R1) sont implémentés en mémoire après la plage mémoire (P1) où a été dupliqué le registre de transmission/réception.

4. Procédé selon l'une quelconque des revendications 1 à 3, **caractérisé en ce que** les registres de contrôle (R0, R1) sont implémentés en mémoire selon un ordre décroissant d'usage par rapport à la plage mémoire (P1) où sont dupliquées les adresses du registre de transmission/réception, l'usage d'un registre de contrôle étant défini par la fréquence de son adressage.

5. Procédé selon l'une quelconque des revendications précédentes, **caractérisé en ce que** le nombre de duplications en mémoire du registre de transmission/réception dépend du type de protocole de communication associé au périphérique.

6. Procédé selon l'une quelconque des revendications précédentes, **caractérisé en ce que** la duplication en mémoire du registre de transmission/réception résulte d'un décodage partiel des adresses des données devant être mémorisées.

7. Procédé selon la revendication 6, **caractérisé en ce que** le décodage partiel consiste à ignorer les adresses de poids faible.

8. Procédé selon l'une quelconque des revendications précédentes, **caractérisé en ce qu'**il comprend la préparation d'une structure de données en mémoire comprenant les données de configuration du périphérique et les données à transmettre de la mémoire vers ledit périphérique, et la mise en oeuvre d'une opération de transfert desdites données vers les registres du périphérique implémentés en mémoire selon un mode DMA incrémental à partir des adresses variables des données de ladite structure vers les adresses variables des différents registres du périphérique, la phase d'initialisation des registres de contrôle du périphérique étant effectuée pendant ladite opération de transfert DMA.

9. Circuit électronique comprenant un microprocesseur (1) relié à au moins un périphérique (4) par l'intermédiaire d'un bus d'interconnexion, **caractérisé en ce que** ledit microprocesseur comprend des moyens pour la mise en oeuvre du procédé selon l'une quelconque des revendications 1 à 8.

10. Circuit selon la revendication 9, **caractérisé en ce que** le périphérique est un périphérique de type SPI ou LIN.
